Europäisches Patentamt

European Patent Office

Office européen des brevets

(19)

(11) Veröffentlichungsnummer : **0 150 052**
**B1**

(12) **EUROPÄISCHE PATENTSCHRIFT**

(45) Veröffentlichungstag der Patentschrift :
06.05.87

(51) Int. Cl.⁴ : **F 16 D 55/224**

(21) Anmeldenummer : 85100460.6

(22) Anmeldetag : 17.01.85

(54) **Teilbelag-Scheibenbremse.**

(30) Priorität : 20.01.84 DE 8401625 U

(43) Veröffentlichungstag der Anmeldung :
31.07.85 Patentblatt 85/31

(45) Bekanntmachung des Hinweises auf die Patenterteilung : 06.05.87 Patentblatt 87/19

(84) Benannte Vertragsstaaten :
DE FR GB IT

(56) Entgegenhaltungen :
EP-A- 0 080 950
EP-A- 0 097 418
FR-A- 2 232 701
FR-A- 2 252 035

(73) Patentinhaber : **LUCAS INDUSTRIES public limited
company**
**Great King Street**
**Birmingham, B19 2XF West Midlands (GB)**

(72) Erfinder : **Rath, Heinrich-Bernhard**
**Sebastian-Kneipp-Strasse 73a**
**D-5414 Vallendar (DE)**

(74) Vertreter : **Wuesthoff, Franz, Dr.-Ing. et al
Patentanwälte Wuesthoff -v. Pechmann-Behrens-
Goetz Schweigerstrasse 2
D-8000 München 90 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft eine Teilbelag-Scheibenbremse, insbesondere für Kraftfahrzeuge, mit

zwei Bremsbacken, die an je einer Seite einer Bremsscheibe angeordnet sind und je einen von dieser abgewandten Stützvorsprung aufweisen,

einer Betätigungsvorrichtung mit einem Kolben, der an einer der Bremsbacken anliegt und eine Aussparung aufweist, in die der Stützvorsprung dieser Bremsbacke eingreift,

einem Schwimmsattel, der über beide Bremsbacken greift und auf der von der Betätigungsvorrichtung abgewandten Seite der Bremsscheibe einen Sattelschenkel mit einer Aussparung für den Stützvorsprung der zweiten Bremsbacke aufweist,

einem Bremsträger mit Stützflächen zum unmittelbaren Aufnehmen von Bremskräften

und mindestens einem zur Achse der Bremsscheibe parallelen Führungsbolzen, längs dessen der Schwimmsattel in bezug auf den Bremsträger durch Reaktionskräfte der Betätigungsvorrichtung verschiebbar ist.

Bei einer bekannten Scheibenbremse dieser Gattung (EP-A-0 080 950) ist der Bremsträger von einer U-förmigen Platte gebildet, die parallel zur Bremsscheibe ausschließlich an deren in Bezug auf das zugehörige Fahrzeug inneren Seite angeordnet ist und ein Paar einander zugewandter Stützflächen aufweist, zwischen denen die eine, vom Kolben der Betätigungsvorrichtung unmittelbar betätigbare Bremsbacke parallel zur Drehachse der Bremsscheibe verschiebbar geführt ist. Der Stützvorsprung dieser Bremsbacke ist kreisförmig aus deren Rückenplatte herausgedrückt und in der Aussparung des Kolbens der Betätigungsvorrichtung mit so großem radialen Spiel aufgenommen, daß diese Bremsbacke die auf sie beim Bremsen einwirkenden Kräfte bei jeder der beiden möglichen Drehrichtungen der Bremsscheibe unmittelbar und ausschließlich auf die eine oder andere Stützfläche des Bremsträgers überträgt, den Kolben der Betätigungsvorrichtung also nicht belastet. Der Stützvorsprung der anderen Bremsbacke, die mit der erstgenannten in Form und Abmessungen übereinstimmt, ist spielfrei in der Aussparung des zugehörigen Sattelschenkels aufgenommen, so daß sämtliche beim Bremsen auf diese Bremsbacke einwirkenden Bremskräfte bei jeder der beiden möglichen Drehrichtungen der Bremsscheibe ausschließlich über den Schwimmsattel und weiter über den Führungsbolzen auf den Bremsträger übertragen werden. Dabei werden Schwimmsattel, Führungsbolzen und Bremsträger mit erheblichen Biegemomenten belastet, die zu einer besonders kräftigen Bemessung dieser Bauteile zwingen und nur teilweise dadurch ausgeglichen werden können, daß die beiden Bremsbacken in bezug auf die Achse der Betätigungsvorrichtung gegensinnig asymmetrisch angeordnet sind.

Der Erfindung liegt deshalb die Aufgabe zugrunde, eine leichte und dennoch hochbelastbare Teilbelag-Scheibenbremse zu schaffen, die sich vor allem für Motorräder und leichte Personenkraftwagen eignet, aber auch für andere Anwendungswecke, bei denen es auf Gewichtsersparnis ankommt.

Diese Aufgabe ist bei einer Scheibenbremse der eingangs beschriebenen Gattung erfindungsgemäß dadurch gelöst,

daß der Bremsträger einen Arm hat, der sich über die Bremsscheibe hinwegerstreckt,

beide Bremsbacken ausschließlich über je eine Stützfläche an diesem Arm zur Übertragung von Bremskräften bei Vorwärtsdrehung der Bremsscheibe unmittelbar am Bremsträger abgestützt sind,

und die Stützvorsprünge beider Bremsbacken auf einen Bereich beschränkt sind, in dem sie sich zur Übertragung von Bremskräften ausschließlich bei Rückwärtsdrehung in der zugehörigen Aussparung des Kolbens bzw. Sattelschenkels abstützen.

Damit wird erreicht, daß die möglicherweise großen Bremskräfte, die durch eine Bremsbetätigung bei Vorwärtsdrehung auftreten, von beiden Bremsbacken in an sich bekannter Weise unmittelbar auf den Arm des Bremsträgers übertragen werden und dadurch den Schwimmsattel und dessen Führung nicht belasten. Infolgedessen kann bei der Gestaltung des Schwimmsattels und seiner Führung an Bauraum und Gewicht gespart werden. Auch der Bremsträger kann raumsparend gestaltet werden, da er nur den einen, sich über die Bremsscheibe hinwegerstreckenden Arm aufzuweisen braucht, an dem die Stützflächen für beide Bremsbacken ausgebildet sind. Die höchsten Bremskräfte, die durch eine Bremsung bei Rückwärtsdrehung der Bremsscheibe auftreten können, sind bei Motorrädern, aber auch bei den meisten anderen Fahrzeugen, erheblich geringer als die größten bei Vorwärtsdrehung möglichen Bremskräfte und können deshalb ohne Gefahr für die Betätigungsvorrichtung und den Schwimmsattel von der axial inneren Bremsbacke über den Kolben und von der axial äußeren Bremsbacke über den zugehörigen Sattelschenkel abgeleitet werden.

Vorzugsweise sind beide Bremsbacken durch je eine innerhalb der zugehörigen Aussparung des Kolbens bzw. Sattelschenkels angeordnete Feder zur zugehörigen Stützfläche am Arm des Bremsträgers hin vorgespannt. Damit wird in an sich bekannter Weise erreicht, daß beide Bremsbacken schon im Ruhezustand an den Stützflächen anliegen und deshalb kein Anschlaggeräusch erzeugen, wenn die Bremse bei Vorwärtsdrehung der Bremsscheibe betätigt wird. Wenn die Bremse dagegen bei Rückwärtsdrehung der Bremsscheibe betätigt wird, müssen die Stützvorsprünge zwar ein gewisses Spiel überwinden, bis sie am zugehörigen Kolben bzw. Sattelschenkel anliegen ; die dadurch möglicherweise entstehenden Anschlaggeräusche sind jedoch verhältnismäßig gering, da die Führung des Kolbens in der Betätigungsvorrichtung sowie die Führung des Schwimmsattels am Bremsträger geräuschdämpfend wirken. Die erfindungsgemäße Anordnung der Stützvorsprünge und ihr Zusammenwirken mit den zugehörigen Federn hat außerdem den Vorteil, daß Bremsbacken-Haltestifte oder -schultern samt zugehörigen Niederhaltefedern der bei Teilbelag-Scheibenbremsen sonst üblichen Art entbehrlich sind. Die Bremsbacken brauchen deshalb keine Rückenplatten aufzuweisen, die sich, wie sonst üblich, mindestens an einer Seite wesentlich über den Rand des Bremsbelags hinauserstrecken, um dort Löcher für Belaghaltestifte oder Abstützflächen für Niederhaltefedern zu bilden.

Es ist ferner vorteilhaft, wenn beide Bremsbacken zusätzlich zu ihrem Stützvorsprung einen ebenfalls in die zugehörige Aussparung des Kolbens bzw. Sattelschenkels eingreifenden Haltevorsprung aufweisen, mit dem sie sich unter der Wirkung ihrer Feder am Kolben bzw. Sattelschenkel abstützen, wenn beim Ausbau oder Wegschwenken des Schwimmsattels aus seiner Betriebsstellung die Stützflächen am Arm des Bremsträgers unwirksam sind.

Schließlich ist die Erfindung vorzugsweise dadurch weitergebildet,

daß der Arm des Bremsträgers eine Führungsbohrung aufweist, die sich über die Bremsscheibe hinwegerstreckt und den Führungsbolzen aufnimmt,

und daß in bezug auf die Bremsscheibe radial innerhalb dieses Führungsbolzens eine zusätzliche Führung für den Schwimmsattel angeordnet ist. Die zusätzliche Führung ist vorzugsweise von einem zweiten Führungsbolzen samt zugehöriger Führungsbohrung gebildet, die sich jedoch nicht über die Bremsscheibe hinwegerstrecken.

Ein Ausführungsbeispiel der Erfindung wird im folgenden anhand schematischer Zeichnungen mit weiteren Einzelheiten beschrieben. Es zeigt :

Figur 1 eine Seitenansicht einer Teilbelag-Scheibenbremse für einen Personenkraftwagen, von dessen axial innerer Seite aus betrachtet,

Figur 2 den Schnitt II-II in Fig. 1,

Figur 3 den Schnitt III-III in Fig. 1 und

Figur 4 den Schnitt IV-IV in Fig. 1.

Die dargestellte Bremse ist einer nur teilweise dargestellten Bremsscheibe 10 zugeordnet und hat einen Bremsträger 12, der zwei Gewindelöcher 14 zur Befestigung an einem Achsschenkel od. dgl. aufweist.

Der Bremsträger 12 hat einen einzigen, kräftigen Arm 16, der sich im wesentlichen parallel zur Achse der Bremsscheibe 10 über deren Rand hinwegerstreckt und eine ebenfalls achsparallele Führungsbohrung 18 aufweist. Die Führungsbohrung 18 ist ein Sackloch, das sich über die Bremsscheibe 10 hinwegerstreckt und einen entsprechend langen ersten Führungsbolzen 20 aufnimmt, der mittels eines an ihm ausgebildeten Gewindezapfens 22 an einem Schwimmsattel 24 befestigt und gegen die Führungsbohrung 18 mit einer Manschette 26 abgedichtet ist.

Zumindest annähernd in einer Ebene, welche die geometrische Achse der Führungsbohrung 18 und die Achse der Bremsscheibe 10 enthält, ist in den Bremsträger 12 eine zweite Führungsbohrung 28 eingearbeitet, die ebenfalls als Sackloch ausgebildet, jedoch im Gegensatz zur Führungsbohrung 18 ausschließlich an der in bezug auf das Fahrzeug axial inneren Seite der Bremsscheibe 10 angeordnet und dementsprechend kürzer ist. Die Führungsbohrung 28 enthält einen zweiten Führungsbolzen 30, dessen aus dem Bremsträger 12 herausragendes Ende mit einer Schraube 32 am Schwimmsattel 24 befestigt und ebenfalls mit einer Manschette 34 abgedichtet ist.

Der Schwimmsattel 24, der mit seinen beiden Führungsbolzen 20 und 30 in den abgedichteten Führungsbohrungen 18 und 28 axial verschiebbar geführt ist, weist an seiner axial inneren Seite einen hydraulischen Betätigungszylinder 36 mit becherförmigen Kolben 38 auf, erstreckt sich über den Rand der Bremsscheibe 10 hinweg und an deren axial äußerer Seite in Form eines gegabelten Sattelschenkels 40 radial nach innen. Der Kolben 38, dessem Achse A sich parallel zu den Führungsbolzen 20 und 30 erstreckt, hat eine zur Bremsscheibe 10 hin offene, kreiszylindrische axiale Aussparung 42 ; gleichachsig damit ist in den Sattelschenkel 40 eine ebenfalls im wesentlichen kreisförmige, jedoch radial nach innen offene Aussparung 44 eingearbeitet.

Am Kolben 38 stützt sich in axialer Richtung eine in bezug auf das Fahrzeug axial innere Bremsbacke 46 mit einer zu ihr gehörigen Rückenplatte 48 ab. An der Rückenplatte 48 ist durch Prägestanzen ein kreissektorförmiger Stützvorsprung 50 ausgebildet, der sich — bezogen auf die gemeinsame Achse A der Aussparungen 42 und 44 — über einen Winkelbereich von ungefähr 60° erstreckt, in die Aussparung 42 eingreift und — bezogen auf die mit einem Pfeil B bezeichnete Vorwärtsdrehrichtung der Bremsscheibe 10 — hintenliegt. Innerhalb der Aussparung 42 ist an der Rückenplatte 48 mittels eines axial angeordneten Niets 52 eine spiralenförmige Feder 54 aus Runddraht befestigt, die sich mit einer nach hinten gerichteten, also der Vorwärtsdrehrichtung B entgegengesetzten Vorspannkraft, am Kolben 38 abstützt.

In entsprechender Weise stützt sich eine axial äußere Bremsbacke 56 mit einer zu ihr gehörigen Rückenplatte 58 an dem gegabelten Sattelschenkel 40 ab, wobei ein ebenfalls an der Rückenplatte 58 in einem Winkelbereich von etwa 60° ausgebildeter, hintenliegender Stützvorsprung 60 in die Aussparung 44 eingreift. An der Rückenplatte 58 ist mit einem zentralen Niet 62 eine spiralenförmige Feder 64 befestigt, die sich im Bereich des Stützvorsprungs 60 am Rand der Aussparung 44 abstützt.

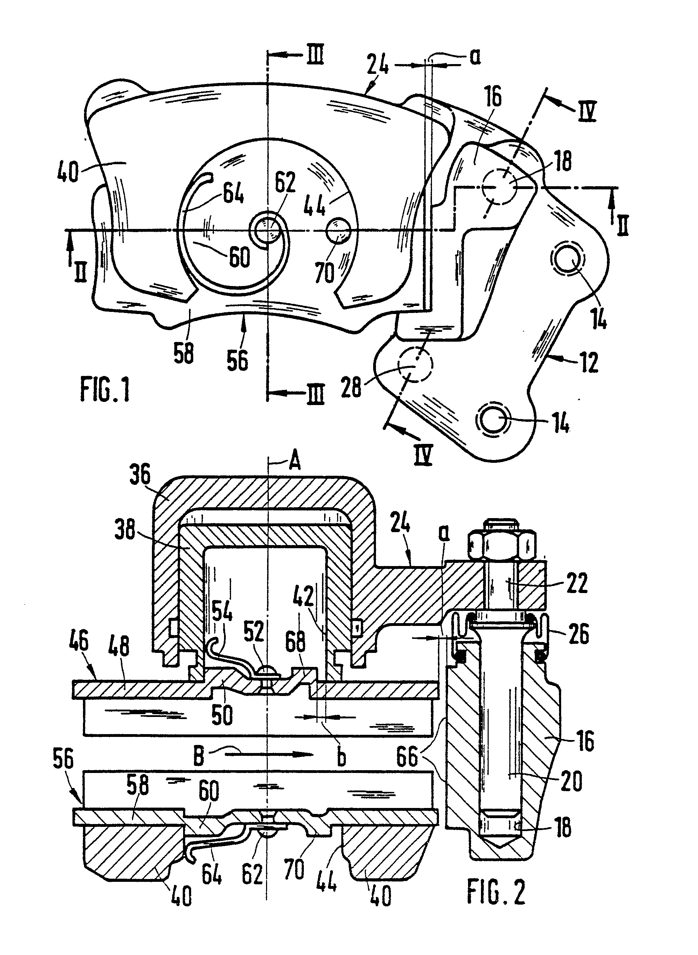

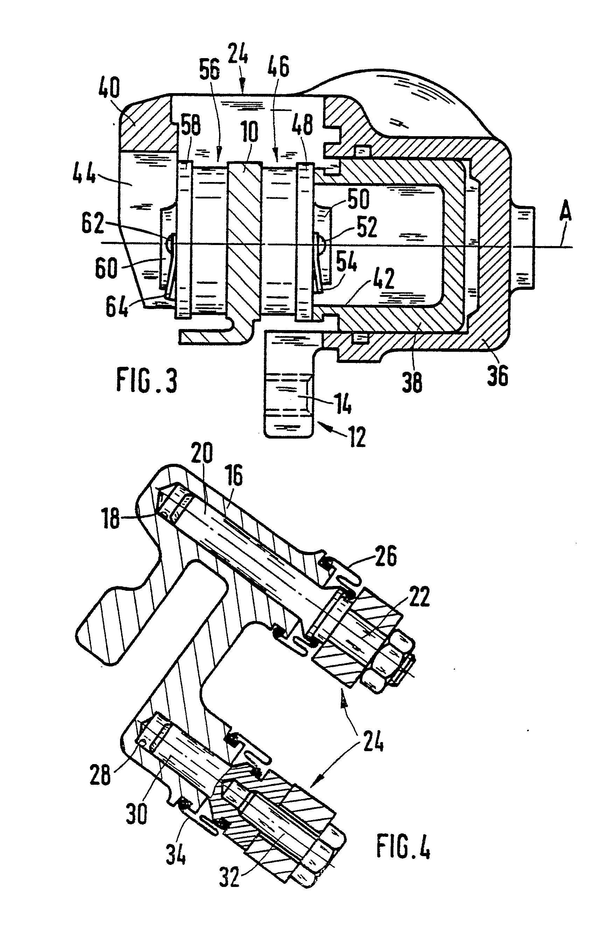

In Fig. 1 und 2 sind die Bremsbacken 46 und 56 in einer Stellung abgebildet, die sie bei einer Bremsung einnehmen, wenn die Bremsscheibe 10 sich rückwärts, also entgegen dem Pfeil B, dreht. Bei einer solchen Bremsung nimmt die Bremsscheibe 10 die beiden Bremsbacken 46 und 56 rückwärts mit, wobei die Widerstände der Federn 54 und 64 überwunden werden, so daß die Stützvorsprünge 50 und 60 sich an den rückwärtigen Rand der zugehörigen Aussparung 42 bzw. 44 anlegen.

An der — bezogen auf die Vorwärtsdrehrichtung B der Bremsscheibe 10 — rückwärtigen Seite des Arms 16 des Bremsträgers 12 ist für jede der beiden Bremsbacken 46 und 56 eine Stützfläche 66 ausgebildet, an der sich die Rückenplatte 48 bzw. 58 der betreffenden Bremsbacke mit ihrer Vorderkante abstützt, wenn die Bremse bei Vorwärtsdrehung der Bremsscheibe 10 betätigt wird. Während einer Betätigung bei Rückwärtsdrehung haben die Vorderkanten der beiden Rückenplatten 48 und 58, wie dargestellt, von der zugehörigen Stützfläche 66 einen Abstand « a », der jedoch beim Lösen der Bremse sofort überwunden wird, da die Federn 54 und 64 stets bestrebt sind, die Bremsbacken 46 und 48 nach vorne zu schieben, so daß der Normalzustand wiederhergestellt wird, bei dem die Rückenplatten 48 und 58 mit ihren Vorderkanten an den Stützflächen 66 anliegen.

Die Stützflächen 66 sind im dargestellten Beispiel zu einer einzigen Flächen zusammengefaßt, könnten aber durch eine Unterbrechung voneinander getrennt sein, wenn dies beispielsweise aus bearbeitungstechnischen Gründen zweckmäßiger ist.

Jede der Rückenplatten 48 und 58 weist, ihrem Stützvorsprung 50 bzw. 60 diametral gegenüber, einen Haltevorsprung 68 bzw. 70 auf. Zwischen jedem der Haltevorsprünge 68 und 70 und dem benachbarten Rand der zugehörigen Aussparung 42 bzw. 44 besteht in der abgebildeten Stellung, welche die Bremsbacken 46 und 56 während einer Bremsung bei Rückwärtsdrehung der Bremsscheibe 10 einnehmen, ein Abstand « b », der etwas größer ist als der Abstand « a ».

Wenn nach einer bei Rückwärtsfahrt ausgeführten Bremsung die beiden Bremsbacken 46 und 56 von ihren Federn 54 und 64 wieder nach vorne geschoben werden, bis die Vorderkanten der Rückenplatten 48 und 58 an den Stützflächen 66 anliegen, bleibt zwischen jedem der beiden Haltevorsprünge 68 und 70 und dem benachbarten Rand der zugehörigen Aussparung 42 bzw. 44 noch ein kleiner Zwischenraum, der mit Sicherheit ausschließt, daß bei Vorwärtsdrehung B der Bremsscheibe 10 Bremskräfte von den Bremsbacken 46, 56 auf den Kolben 38 bzw. Sattelschenkel 40 übertragen werden.

Wenn die Bremsbacken 46 und 56 ausgewechselt werden·müssen, wird die Schraube 32 entfernt, so daß der Schwimmsattel 24 um die Achse des Führungsbolzens 20 geschwenkt werden kann, wobei beide Führungsbolzen 20 und 30 in der zugehörigen Führungsbohrung 18 bzw. 28 bleiben und die Abdichtung durch die zugehörige Manschette 26 bzw. 34 erhalten bleibt. Wenn der Schwimmsattel 24 von der Bremsscheibe 10 weggeschwenkt wird, in Fig. 1 nach oben rechts, können die Rückenplatten 48 und 58 sich nicht mehr an den Stützflächen 66 abstützen, so daß sie von den Federn 54 und 64 in Richtung des Pfeils B weiter nach vorne gedrückt werden. Dabei legen sich die Haltevorsprünge 68 und 70 an den Rand der zugehörigen Aussparung 42 bzw. 44 an, wodurch verhindert wird, daß die Bremsbacken 46 und 48 unbeabsichtigt herausfallen.

In entsprechender Weise werden neue Bremsbacken 46 und 56 mit ihrer Feder 54 bzw. 64 und ihrem Haltevorsprung 68 bzw. 70 in der zugehörigen Aussparung 42 bzw. 44 festgeklemmt, bis der Schwimmsattel 24 wieder über die Bremsscheibe 10 geschwenkt worden ist und die neuen Bremsbacken sich nun mit der vorderen Kante ihrer Rückenplatte 48 bzw. 58 an die zugehörige Stützfläche 66 anlegen, wodurch der Abstand « b » wiederhergestellt wird.

## Patentansprüche

1. Teilbelag-Scheibenbremse, insbesondere für Kraftfahrzeuge, mit
   zwei Bremsbacken (46 ; 56), die an je einer Seite einer Bremsscheibe (10) angeordnet sind und je einen von dieser abgewandten Stützvorsprung (50 ; 60) aufweisen,
   einer Betätigungsvorrichtung mit einem Kolben (38), der an einer der Bremsbacken (46) anliegt und eine Aussparung (42) aufweist, in die der Stützvorsprung (50) dieser Bremsbacke (46) eingreift,
   einem Schwimmsattel (24), der über beide Bremsbacken (46 ; 56) greift und auf der von der Betätigungsvorrichtung abgewandten Seite der Bremsscheibe (10) einen Sattelschenkel (40) mit einer Aussparung (44) für den Stützvorsprung (60) der zweiten Bremsbacke (56) aufweist,
   einem Bremsträger (12) mit Stützflächen (66) zum unmittelbaren Aufnehmen von Bremskräften
   und mindestens einem zur Achse der Bremsscheibe (10) parallelen Führungsbolzen (20), längs dessen der Schwimmsattel (24) in bezug auf den Bremsträger (12) durch Reaktionskräfte der Betätigungsvorrichtung verschiebbar ist,
   dadurch gekennzeichnet,
   daß der Bremsträger (12) einen Arm (16) hat, der sich über die Bremsscheibe (10) hinwegerstreckt,
   daß beide Bremsbacken (46 ; 56) ausschließlich über je eine Stützfläche (66) an diesem Arm (16) zur Übertragung von Bremskräften bei Vorwärtsdrehung der Bremsscheibe (10) unmitelbar am Bremsträger (12) abgestützt sind,
   und daß die Stützvorsprünge (50 ; 60) beider Bremsbacken (46 ; 56) auf einen Bereich beschränkt sind, in dem sie sich zur Übertragung von Bremskräften ausschließlich bei Rückwärtsdrehung in der zugehörigen Aussparung (42 ; 44) des Kolbens (38) bzw. Sattelschenkels (40) abstützen.

2. Teilbelag-Scheibenbremse nach Anspruch 1, dadurch gekennzeichnet, daß beide Bremsbacken (46 ; 56) durch je eine innerhalb der zugehörigen Aussparung (42 ; 44) des Kolbens (38) bzw. Sattelschenkels (40) angeordnete Feder (54 ; 64) zur zugehörigen Stützfläche (66) am Arm (16) des Bremsträgers (12) hin vorgespannt sind.

3. Teilbelag-Scheibenbremse nach Anspruch 2, dadurch gekennzeichnet, daß beide Bremsbacken (46 ; 56) zusätzlich zu ihrem Stützvorsprung (50 ; 60) einen ebenfalls in die zugehörige Aussparung (42 ; 44) des Kolbens (38) bzw. Sattelschenkels (40) eingreifenden Haltevorsprung (68 ; 70) aufweisen.

4. Teilbelag-Scheibenbremse nach Anspruch 1, dadurch gekennzeichnet,

daß der Arm (16) des Bremsträgers (12) eine Führungsbohrung (18) aufweist, die sich über die Bremsscheibe (10) hinwegerstreckt und den Führungsbolzen (20) aufnimmt,

und daß in bezug auf die Bremsscheibe (10) radial innerhalb dieses Führungsbolzens (20) eine zusätzliche Führung (28, 30) für den Schwimmsattel (24) angeordnet ist.

### Claims

1. A spot-type disc brake, especially for motor vehicles, comprising

two brake pads (46 ; 56) disposed at either side of a brake disc (10) and each having a supporting projection (50 ; 60) averted from said brake disc,

an actuating mechanism including a piston (38) in abutment against one of the brake pads (46) and formed with a recess (42) which of engaged by the supporting projection (50) of this brake pad (46),

a floating caliper (24) straddling both brake pads (46 ; 56) and having a caliper leg (40) at the side of the brake disc (10) averted from the actuating mechanism and formed with a recess (44) for the supporting projection (60) of the second brake pad (56),

a brake carrier (12) having supporting surfaces (66) for direct reception of braking forces,

and at least one guide pin which extends in parallel to the axis of the brake disc (10) and along which the floating caliper (24) is displaceable with respect to the brake carrier (12) by reaction forces of the actuating mechanism, characterized in that

the brake carrier (12) has an arm (16) which extends across the brake disc (10),

both brake pads (46 ; 56) are supported directly on the brake carrier (12) exclusively by a supporting surface (66) each at this arm (16) to transmit braking forces upon forward rotation of the brake disc (10),

and the supporting projections (50 ; 60) of both brake pads (46 ; 56) are limited to an area in which they are supported in the respective recess (42 ; 44) of the piston (38) or caliper leg (40) to transmit braking forces upon backward rotation only.

2. The spot-type disc brake as claimed in claim 1, characterized in that both brake pads (46 ; 56) are biased toward the respective supporting surface (66) at the arm (16) of the brake carrier (12) by a spring (54 ; 64) each disposed within the respective recess (42 ; 44) of the piston (38) or caliper leg (40).

3. The spot-type disc brake as claimed in claim 2, characterized in that in addition to their supporting projection (50 ; 60) both brake pads (46 ; 56) comprise a retaining projection (68 ; 70) which likewise engages in the respective recess (42 ; 44) of the piston (38) or caliper leg (40).

4. The spot-type disc brake as claimed in claim 1, characterized in that

the arm (16) of the brake carrier (12) includes a guide bore (18) which extends across the brake disc (10) and takes up the guide pin (20),

and an additional guide means (28, 30) for the floating caliper (24) is disposed radially inside of said guide pin (20) with respect to the brake disc.

### Revendications

1. Frein à disque à garniture partielle, notamment pour véhicules automobiles, comprenant :

deux mâchoires de frein (46 ; 56), qui sont disposées chacune d'un côté du disque de frein (10) et qui comportent chacune une saillie d'appui (50 ; 60) opposée au disque,

un dispositif d'actionnement comportant un piston (38) qui s'applique contre une des mâchoires de frein (46) et présente un évidement (42) dans lequel s'accroche la saillie d'appui (50) de cette mâchoire de frein (46),

un étrier flottant (24), qui s'accroche sur les deux mâchoires de frein (46 ; 56) et qui comporte, sur le côté du disque de frein (10) qui est opposé au dispositif d'actionnement, une branche d'étrier (40) pourvue d'un évidement (44) pour la saillie d'appui (60) de la seconde mâchoire de frein (56),

un support de frein (12) pourvu de surfaces d'appui (66) pour absorber directement des forces de freinage,

et au moins une broche de guidage (20) parallèle à l'axe du disque de frein (10) et le long de laquelle l'étrier flottant (24) est mobile par rapport au support de frein (12) sous l'effet de forces de réaction du dispositif d'actionnement, caractérisé en ce que,

le support de frein (12) comporte un bras (16) qui s'étend au-dessus du disque de frein (10), en ce que les deux mâchoires de frein (46 ; 56) s'appuient directement sur le support de frein (12), chacune exclusivement par l'intermédiaire d'une surface d'appui (66) de ce bras (16) pour la transmission de forces de freinage, lors d'une rotation vers l'avant du disque de frein (10), et

en ce que les saillies d'appui (50 ; 60) des deux mâchoires de frein (46 ; 56) sont limitées à une zone dans laquelle elles s'appuient, en vue de la transmission des forces de freinage, exclusivement lors d'une rotation vers l'arrière dans l'évidement associé (42 ; 44) du piston (38) ou de l'étrier flottant (40).

2. Frein à disque à garniture partielle selon la revendication 1, caractérisé en ce que les deux mâchoires de frein (46 ; 56) sont précontraintes chacune au moyen d'un ressort (54 ; 64), disposé à l'intérieur de l'évidement associé (42 ; 44) du piston (38) ou de la branche d'étrier (40), en direction de la surface d'appui associée (66) prévue sur le bras (16) du support de frein (12).

3. Frein à disque à garniture partielle selon la revendication 2, caractérisé en ce que les deux mâchoires de frein (46 ; 56) comportent, en addition à leur saillie d'appui (50 ; 60), une saillie de maintien (68 ; 70) s'accrochant également dans l'évidement associé (42 ; 44) du piston (38) ou de la branche d'étrier (40).

4. Frein à disque à garniture partielle selon la revendication 1, caractérisé en ce que :

le bras (16) du support de frein (12) comporte un trou de guidage (18) qui s'étend au-dessus du disque de frein (10) et qui reçoit la broche de guidage (20),

et en ce qu'il est prévu, par rapport au disque de frein (10) radialement à l'intérieur de cette broche de guidage (20), un guide additionnel (28, 30) pour l'étrier flottant (24).

FIG.1

FIG.2

FIG.3

FIG.4